Europäisches Patentamt

European Patent Office

Office européen des brevets

(11) Veröffentlichungsnummer: **0 393 433**

**A2**

(12) **EUROPÄISCHE PATENTANMELDUNG**

(21) Anmeldenummer: **90106562.3**

(22) Anmeldetag: **05.04.90**

(51) Int. Cl.⁵: **F16L 58/10**

(30) Priorität: **20.04.89 DE 3912933**

(43) Veröffentlichungstag der Anmeldung:
**24.10.90 Patentblatt 90/43**

(84) Benannte Vertragsstaaten:
**AT BE CH DE FR LI LU NL**

(71) Anmelder: **THEODOR BREE, BAUSTOFF- UND CEMENTWAREN GMBH & CO**
**Vitalisstrasse 112**
**D-5000 Köln 30(DE)**

(72) Erfinder: **Jungen, Christoph**
**Bahnstrasse 90a**
**D-4049 Rommerskirchen(DE)**

(74) Vertreter: **Langmaack, Jürgen, Dipl.-Ing. et al**
**Patentanwälte Maxton . Maxton . Langmaack**
**Goltsteinstrasse 93 Postfach 51 08 06**
**D-5000 Köln 51(DE)**

(54) Verfahren zum Beschichten der Innenwandung eines Betonrohres und Vorrichtung zur Durchführung des Verfahrens.

(57) 2.1 Für Abwässerkanäle aus Betohröhren hat sich mit der zunehmenden Belastung der Abwässer mit agressiven Substanzen die Notwendigkeit eines Korrosionsschutzes der Rohrinnenwandung ergeben. Schutzanstriche mit Kunstharzen sind nicht immer aufzubringen und bieten auch Probleme hinsichtlich der Standzeiten.

2.2 Es wird ein Verfahren zum Aufbringen einer Kunstharzmörtelschicht vorgeschlagen, wobei eine thixotrope Beschichtungsmasse unter Einwirkung pulsierender Kräfte verflüssigt und über einen Ringspalt an die Rohrinnenwandung als Schicht angelegt und geglättet wird.

2.3 Es läßt sich nach diesem Verfahren in einem Arbeitsgang eine dichte porenfreie Schutzschicht von mehreren Millimetern Dicke auftragen, die eine hohe Haftzugfestigkeit aufweist.

## Verfahren zum Beschichten der Innenwandung eines Betonrohres und Vorrichtung zur Durchführung des Verfahrens

Die Erfindung betrifft ein Verfahren zum Beschichten der Innenwandung eines Betonrohres mit einer vorzugsweise reaktiv aushärtenden und lösungsmittelfreien Beschichtungsmasse auf Kunstharzbasis.

Für erdverlegte Abwasserkanäle aus Betonrohren hat sich mit der zunehmenden Belastung der Abwässer mit agressiven Substanzen die Notwendigkeit ergeben, die den Abwasserkanal bildenden Betonrohre auf der Innenwandung mit einer Korrosionsschutzschicht zu versehen. Bei Rohren mit Nennweiten über 600 mm kann eine derartige Beschichtung in Form eines Epoxydharzanstrichs von Hand aufgetragen werden, da der Innenraum des Rohres von beiden Rohrenden her ohne weiteres zugänglich ist. Bei Rohre kleinerer Nennweite ist ein derartiger Schutzanstrich nur noch unter Schwierigkeiten und ab einer bestimmten Nennweite von Hand wegen der mangelnden Zugänglichkeit nicht mehr aufzubringen, wobei insbesondere eine einwandfreie Beschichtung wegen der fehlenden Sichtkontrolle kaum noch zu erreichen ist. Eine Beschichtung in möglichst gleichmässiger Schichtdicke mit einem Kunstharzmörtel als Korrosionsschutzschicht ist auf diese Weise, insbesondere bei Rohren kleiner Nennweite, praktisch nicht mehr möglich.

Der Erfindung liegt die Aufgabe zugrunde, ein Verfahren zu schaffen, das insbesondere bei kleineren Rohrdurchmessern das Auftragen einer Beschichtungsmasse in möglichst gleichmässiger Schichtdicke erlaubt.

Diese Aufgabe wird erfindungsmäßig dadurch gelöst, daß eine Beschichtungsmasse mit thixotropen Eigenschaften als Vorratsmenge an einem Ende, vorzugsweise dem unteren Rohrende in den Innenraum des vertikal ausgerichteten Rohres eingebracht, durch Einleitung pulsierender Kräfte in die Vorratsmenge verflüssigt und bei im wesentlichen konstantem Zufluß über einen Ringspalt an die Innenwand als Schicht angelegt und in Achsrichtung fortschreitend in wenigstens einem Durchgang aufgestrichen wird. Dieses Verfahren hat den Vorteil, daß Beschichtungsmassen in einer Schichtdicke aufgebracht werden können, wie sie von Hand weder im Anstrich- noch im Spachtelverfahren erzielbar sind. Wesentlich ist hierbei, daß eine Beschichtung mit nahezu gleichmässiger Schichtdicke sowohl über den Rohrumfang als auch über die Rohrlänge aufgebracht werden kann. Das Verfahren ist grundsätzlich unabhängig von dem jeweiligen Rohrdurchmesser, kann jedoch mit besonderem Vorteil für Rohre mit kleinen Nennweiten eingesetzt werden, deren Innenraum nicht mehr "begehbar" in dem Sinne ist, daß die gesamte Rohrlänge von beiden Rohrenden her mit einem Handwerkszeug von Hand aus erreichbar ist. Durch die Verwendung einer thixotropen Beschichtungsmasse wird erreicht, daß durch die Einleitung der pulsierenden Kräfte nicht nur die Vorratsmenge verflüssigt wird, sondern daß auch das Anlegen der Schicht an die Innenwand noch unter dem Einfluß der pulsierenden Kräfte erfolgt. Hierdurch werden nicht nur die Poren in der Oberfläche der Innenwandung des Betonrohres vollständig ausgefüllt, sondern es hat sich auch gezeigt, daß sich an beiden Grenzschichten der Beschichtung, und zwar sowohl auf der der Innenwandung zugekehrten Seiten als auch auf der freien Oberfläche, ein dünner Harzfilm bildet, so daß sich insgesamt eine porenfreie Innenfläche ergibt. Bevorzugt wird als Beschichtungsmasse ein Kunstharzmörtel verwendet, der im wesentlichen aus einem Kunstharz, vorzugsweise auf Epoxyd- oder Polyesterharzbasis aufgebaut ist und wenigstens einen, vorzugsweise mineralischen Füllstoff sowie Thixotropiermittel enthält. Da aus Wasserschutzgründen derartige Harze lösungsmittelfrei verarbeitet werden müssen, empfiehlt es sich hier, die üblichen Epoxydharzmischungen zu verwenden, bei denen zwei Harzkomponenten nach der Mischung reaktiv aushärten. Als mineralische Füllstoffe werden in erster Linie feuergetrocknete Quarzsande verarbeitet, deren Kornspektrum bei Dünnbeschichtungen, d.h. beim Auftrag einer Beschichtung bis zu 2 mm Dicke zwischen 0 und 0,35 $\mu$m liegt und deren Kornspektrum bei einer Dickbeschichtung bis zu 7 mm bei 0,06 bis 0,7 mm liegt. Überraschend hat sich nun gezeigt, daß bei der Verwendung des erfindungsgemäßen Verfahrens in die Harzmischung mineralische Zuschlagstoffe in einer solchen Menge eingebracht werden können, daß die fertige Masse von Hand schon nicht mehr verarbeitbar ist. Wird jedoch diese Beschichtungsmasse nach dem erfindungsgemässen Verfahren aufgetragen, so bewirken die in der Masse enthaltenen Thixotropiermittel einen einwandfreien Zulauf über den Ringspalt an die Innenwandung, wobei dann unter dem Einfluß der noch einwirkenden pulsierenden Kräfte die Beschichtungsmasse auch in die Poren der Oberfläche eingearbeitet werden und diese selbst bei einer Dünnbeschichtung mit einer Schichtdicke von nur 0,5 mm vollständig geschlossen werden. Der vorstehend beschriebene Effekt der Bildung eines Harzfilmes an der Innenwandung des Rohres selbst und auf der freien Oberfläche der Beschichtung tritt auch bei der vorstehend angegebenen Konsistenz der Beschichtungsmasse ein. Es ergibt sich somit der Vorteil, daß die Innenwandung über den Kunstharzanteil gegenüber den hier infrage kommenden, im Abwasser enthaltenen Schadstoffen korrosionsbeständig ist, und daß darüber hinaus durch den hohen Anteil an mineralischen Zuschlagstoffen, insbesondere Quarzsand, sich eine hohe Widerstandsfähigkeit gegen mechanische Beanspruchung ergibt. Sobald die Schicht an der zu beschichtenden Innenwandung des Rohres anliegt und keine pulsierenden Kräfte mehr auf die Beschichtungsmasse wirksam sind, verliert die aufgetragene Masseschicht ihre Fließfähigkeit, so daß trotz der vertikalen Ausrichtung der zu beschichtenden Wandung und bei einem Arbeiten von unten nach oben ein Abfließen nach unten vermieden ist.

In einer bevorzugten Ausgestaltung des erfindungsgemäßen Verfahrens ist vorgesehen, daß beim Aufstreichen der Beschichtungsmasse der axial fortschreitenden Streichbewegung eine in Achsrichtung pulsierenden Bewegung überlagert ist. Durch diese überlagerte, pulsierende Bewegung wird die Fließfähigkeit der Beschichtungsmasse solange aufrechterhalten, bis die aufzutragende Schicht an der Innenwandung des Rohre glattgestrichen ist. Insbesondere durch diese Maßnahme wird erreicht, daß selbst bei einer Kunstharzmasse mit einem hohen Anteil an mineralischen Zuschlagstoffen sich zumindest auf der freien Schichtoberfläche ein dünner Harzfilm ausbildet, der eine dichte Oberfläche bewirkt.

In einer Ausgestaltung ist ferner vorgesehen, daß für den Auftrag einer Dickschicht in einem ersten Arbeitsgang eine Grundschicht und nach dem Aushärten in einem zweiten Arbeitsgang eine Feinschicht aufgebracht wird. In einer anderen Ausgestaltung der Erfindung ist vorgesehen, daß insbesondere für den Auftrag einer Dünnschicht nach dem Aufbringen der Beschichtungsmasse die Schichtoberfläche ohne Massezufluß in einer durchgehenden Streichbewegung mit überlagerter pulsierender Bewegung glattgestrichen wird.

Während bisher bei Betonrohren Wert auf eine möglichst glatte Oberfläche gelegt wurde, ist die Anwendung des erfindungsgemäßen Verfahrens vorteilhaft bei rauhen und offenporigen Betonoberflächen, da hier die Beschichtung zu einer porenfreien Oberfläche führt. Unter der Wirkung der pulsierenden Kräfte und Bewegungen werden alle Poren in der Betonoberfläche ausgefüllt und eine glatte Oberfläche erzielt. Auf eine Vorbehandlung der Oberfläche kann verzichtet werden. Versuche zeigten, daß bei rauhen Oberflächen eine Beschichtung von Hand für die aufgebrachte Oberflächenbeschichtung eine Haftzugfestigkeit von 3 bis 4 $N/mm^2$ und eine Beschichtung nach dem erfindungsgemäßen Verfahren eine Haftzugfestigkeit von 5 bis 5,5 $N/mm^2$ ergab. Dies zeigt, daß die Verankerung der Beschichtung durch den Einfluß der pulsierenden Bewegung während des Auftragens verbessert wurde und der Widerstand gegen ein Ablösen der Beschichtung erhöht ist.

Die Erfindung betrifft ferner eine Vorrichtung zum Beschichten der Innenwandung eines Betonrohres mit einer Beschichtungsmasse, vorzugsweise einer reaktiv aushärtenden und lösungsmittelfreien Beschichtungsmasse auf Kunstharzbasis, insbesondere zur Durchführung des vorstehend gekennzeichneten erfindungsgemäßen Verfahrens mit seinen Ausgestaltungen.

Erfindungsgemäß wird für eine derartige Vorrichtung vorgeschlagen, daß ein im wesentlichen zylindrischer Spachtelkörper vorgesehen ist, der mit einem Antriebsmittel für den axialen Durchzug durch das zu beschichtende Rohr in Verbindung steht, und der eine entsprechend der vorgesehenen Schichtdicke mit Abstand zur Rohrinnenwandung endende, in Umfangsrichtung verlaufende Streichkante aufweist, die, in Durchzugsrichtung gesehen, in eine konische Zulauffläche übergeht, daß auf die Zulauffläche wenigstens eine Zulauföffnung für die Beschichtungsmasse mündet, die mit einer Massezufuhreinrichtung in Verbindung steht und daß ein Schwingungserzeuger zur Erzeugung einer in Durchzugrichtung verlaufenden Schwingungsbewegung vorgesehen ist, der zumin dest den Bereich der Zulauföffnung in Schwingung versetzt. Durch diese Anordnung wird erreicht, daß die thixotrope Beschichtungsmasse über die konische Zulauffläche in den durch die Streichkante einerseits und die Innenwandung der Rohres andererseits definierten Ringspalt fließt. Da die Zulauffläche zusammen mit der Innenwandung einen sich keilförmig verringernden Zulauf zum Ringspalt bildet, wird die auf der Zulauffläche noch fließende Beschichtungsmasse an die Rohrinnenwandung gedrückt. Die durch die Streichkante auf die bereits an der Rohrinnenwandung anliegende Beschichtungsmasse wirkenden Druckkräfte erhalten oder bewirken erneut eine gewisse Verflüssigung der Masse, so daß diese in alle Poren und Rauhigkeiten der Rohrinnenwandung einfließen kann.

In einer bevorzugten Ausgestaltung der Erfindung ist vorgesehen, daß am Spachtelkörper in Durchzugrichtung gesehen hinter der Streichkante wenigstens eine in Umfangsrichtung verlaufende Glättmanschette aus einem elastisch verformbaren Werkstoff angeordnet ist. In einer bevorzugten Ausgestaltung der Erfindung ist hierbei vorgesehen, daß die Glättmanschette auf ihrer Innenseite mit einem umlaufenden Blähkörper versehen ist, der mit einem Druckmittel beaufschlagbar ist. Durch diesen Blähkörper besteht die Möglichkeit, einen zusätzlichen Einfluß auf die Schichtdicke zu nehmen, insbesondere Rundheitsfehler des Rohres auszugleichen. Durch den Blähkörper kann nämlich der Durchmesser des Spachtelkörpers noch etwas vergrößert werden, so daß sich hinter der (starren) Streichkante eine weitere (elastische) "Streichkante" bildet, durch die die von der starren Streichkante aufgetragene Schicht noch nachgearbeitet und in Umfangsrichtung aufgrund der elastischen Einstellung der Glättmanschette gleichmäßig verteilt wird. Diese Ausführungsform eignet sich insbesondere zum Auftrag einer Dünnbeschichtung mit einer Schichtdicke von max. 2 mm.

Während es grundsätzlich möglich ist, den Spachtelkörper über ein zentrales Führungselement zu führen, das koaxial zur Rohrachse ausgerichtet ist, ist in einer bevorzugten Ausgestaltung der Erfindung vorgesehen, daß der Spachtelkörper mit mehreren, gleichmäßig auf den Umfang verteilten Abstandhaltern versehen ist, die an der Rohrinnenwandung anliegen. Dies hat den Vorteil, daß Formfehler des zu beschichtenden Rohres sehr viel besser ausgeglichen werden und weiterhin den Vorteil, daß ohne zusätzliche Manipulationen eine Vielzahl von nebeneinanderstehenden Rohren nacheinander beschichtet werden können, da lediglich jeweils der Spachtelkörper in das Rohrinnere eingeführt zu werden braucht. Der besondere Vorteil liegt vor allem darin, daß das mit einer noch nicht ausgehärteten Beschichtung versehene Rohr ruhig stehen bleiben kann, so daß aufgrund der thixotropen Eigenschaften der aufgebrachten Beschichtungsmasse hier jede Erschütterung, wie sie ein Transport mit sich brächte, vermieden wird.

In einer besonders vorteilhaften Ausgestaltung der Erfindung ist hierbei ferner vorgesehen, daß die Abstandhalter an der Glättmanschette vorzugsweise im Bereich des Blähkörpers befestigt sind. Diese Anordnung hat den Vorteil, daß auch Rundheitsfehler ausgeglichen werden, da durch das Zusammenwirken der durch den Blähkörper nach außen gedrückten Glättmanschette einerseits und der mit der Glättmanschette verbundenen Abstandhalter andererseits eine durch die Höhe der Abstandhalter definierte Schichtdicke auch dann aufgebracht werden kann, wenn die Querschnitte der Rohre nicht exakt rund sind. Die beim Schichtauftrag durch die Abstandhalter in der angelegten Masseschicht in axialer Richtung verlaufenden, durch die Abstandhalter verursachten Riefen können in einem zweiten Durchgang mit einem Spachtelkörper ohne Abstandhalter mit geringer Massezufuhr dann durchgehend und zuverlässig zugespachtelt werden. Durch die Verwendung von lösbaren Abstandhaltern ist es möglich, mit dem für eine definierte Nennweite einsetzbaren Spachtelkörper je nach dem Einsatzfall Schichten mit unterschiedlicher Schichtdicke aufzutragen, da die Höhe der Abstandhalter die aufzubringende Schichtdicke bestimmt. Als besonders zweckmäßig hat sich jedoch herausgestellt, wenn der Spachtelkörper zwei mit Abstand zueinander angeordnete Glättmanschetten aufweist. Hierbei ist die der Streichkante unmittelbar benachbarte Glättmanschette mit den Abstandhaltern versehen. Die nachfolgende Glättmanschette ust dagegen durchgehend glatt ausgebildet. Beide Glättmanschetten sind mit einem Blähkörper versehen, wobei die beiden Blähkörper unabhängig voneinander mit Druckmittel beaufschlagt werden können. Hierdurch können in einem Arbeitsgang die Beschichtungsmasse aufgebracht und unmittelbar nachfolgend die durch die Abstandhalter gezogenen Rillen glattgestrichen werden. Durch die gesonderte Druckbeaufschlagung der zweiten Glättmanschette kann der Anpreßdruck und damit die Oberflächenausbildung beeinflußt werden.

In besonders zweckmäßiger Ausgestaltung der Erfindung ist vorgesehen, daß die Massezufuhreinrichtung durch einen auf dem Spachtelkörper angeordneten Vorratsbehälter gebildet wird, der mit dem Schwingungserzeuger in Verbindung steht. Diese Anordnung hat den Vorteil, daß insbesondere bei der Verwendung reaktiv aushärtender Kunstharzmörtel als Beschichtungsmasse jeweils eine genau bemessene Vorratsmenge eingesetzt werden kann, die aufgrund der Thixotropieeigenschaften einfach zu handhaben ist und erst nach dem Einführen des Spachtelkörpers in den Rohrinnenraum unter dem Einfluß der vom Schwingungserzeuger erzeugten pulsierenden Bewegungen verflüssigt und dann der Streichkante zuläuft. Hierbei ist es zweckmäßig, daß die auf die Zulauffläche mündende Zulauföffnung durch einen umlaufenden Schlitz im Bodenbereich des Vorratsbehälters gebildet wird. Über die vorzugsweise einstellbare Schlitzbreite fließt dann die Beschichtungsmasse bereits in einer gleichmässigen Masseschicht der Streichkante zu, so daß die schichtartig zulaufende Menge praktisch nur noch an die Innenwandung angedrückt und glattgestrichen wird.

Besonders zweckmäßig ist es, wenn der Boden des Vorratsbehälters im Bereich der Zulauföffnung an die Zulauffläche anschließend nach oben konisch zulaufend ausgebildet ist. Hierdurch ergibt sich ein einwandfreier und gleichmäßig über den Umfang der vorzugsweise schlitzförmigen Zulauföffnung verteilter Massefluß.

In einer besonders vorteilhaften und konstruktiv einfachen Bauform ist der Vorratsbehälter durch einen Kragen gebildet, der auf den in Durchzugsrichtung konisch zulaufenden Spachtelkörper höheneinstellbar befestigt ist. Der Kragen bildet hierbei die Seitenwandung des Vorratsbehälters, während die dem konisch zulaufenden Teil des Spachtelkörpers zugekehrte Unterkante des Kragens mit ihrem Abstand die Zulauföffnung definiert.

Während es grundsätzlich möglich ist, die Schwingungen von außen einzuleiten, ist es in einer bevorzugten Ausgestaltung der Erfindung vorgesehen, daß der Schwingungserzeuger im Spachtelkörper, vorzugsweise unterhalb des Vorratsbehälters angeordnet ist. Der Vorteil dieser Anordnung besteht darin, daß die in Achsrichtung verlaufenden Schwingungsbewegungen die im Vorratsbehälter befindliche thixotrope Beschichtungsmasse fließfähig machen und daß dann die Fließfähigkeit beim Zulauf zur Streichkante aufrechterhalten wird. Da die in axialer Richtung erfolgenden Schwingbewegungen der konstanten Durchzugsbewegung überlagert sind, wird die an die Innenwandung des Rohres angedrückte Beschichtungsmasse dann durch die Fläche der Glättmanschette "verrieben", wobei die Beschichtungsmasse in die Poren der Innenwandung des Rohres eingedrückt und etwaige Luftblasen aus der Masse herausgedrückt werden. Hierdurch ergibt sich auch eine optimale Einleitung der Schwingungsenergie.

In einer bevorzugten weiteren Ausgestaltung der Erfindung ist hierbei vorgesehen, daß als Schwingungserzeuger zwei in der Drehzahl regelbare und gegenläufig angetriebene Unwuchten vorgesehen sind. Diese Anordnung hat den Vorteil, daß sowohl die Kräfte als auch die Frequenz der pulsierenden Bewegungen genau einstellbar sind, so daß in Abhängigkeit von unterschiedlichen Thixotropieeigenschaften der verwendeten Beschichtungsmassen ein optimales Fließverhalten der jeweils eingesetzten Beschichtungsmasse beim Auftrag auf die Innenwandung eingestellt werden kann.

In weiterer Ausgestaltung der Erfindung ist vorgesehen, daß der Spachtelkörper an seinem oberen Ende mit einem in Durchzugsrichtung verlaufenden Tragrohr verbunden ist, das um ein Mehrfaches länger ist als der Spachtelkörper und das mit seinem freien Ende an einem Hebezeug als Antriebsmittel angehängt ist und durch das die Energieversorgungsleitungen für Schwingungserzeuger und Blähkörper hindurchgeführt sind. Diese Ausgestaltung ergibt ein einfach handhabbares Werkzeug, so daß erfindungsgemäße Verfahren und die erfindungsgemäße Vorrichtung praktisch mit jedem Hebezeug durchgeführt werden kann, das über einen sogenannten Langsamhub verfügt.

Die Erfindung wird anhand schematischer Zeichnungen eines Ausführungsbeispiels näher erläutert. Es zeigen:

Fig. 1 eine Seitenansicht eines Spachtelkörpers, teilweise im Schnitt,

Fig. 2 eine Aufsicht auf den Spachtelkörper gem. Fig. 1,

Fig. 3 den Spachtelkörper gem. Fig. 1 in einem Teilschnitt in größerem Maßstab.

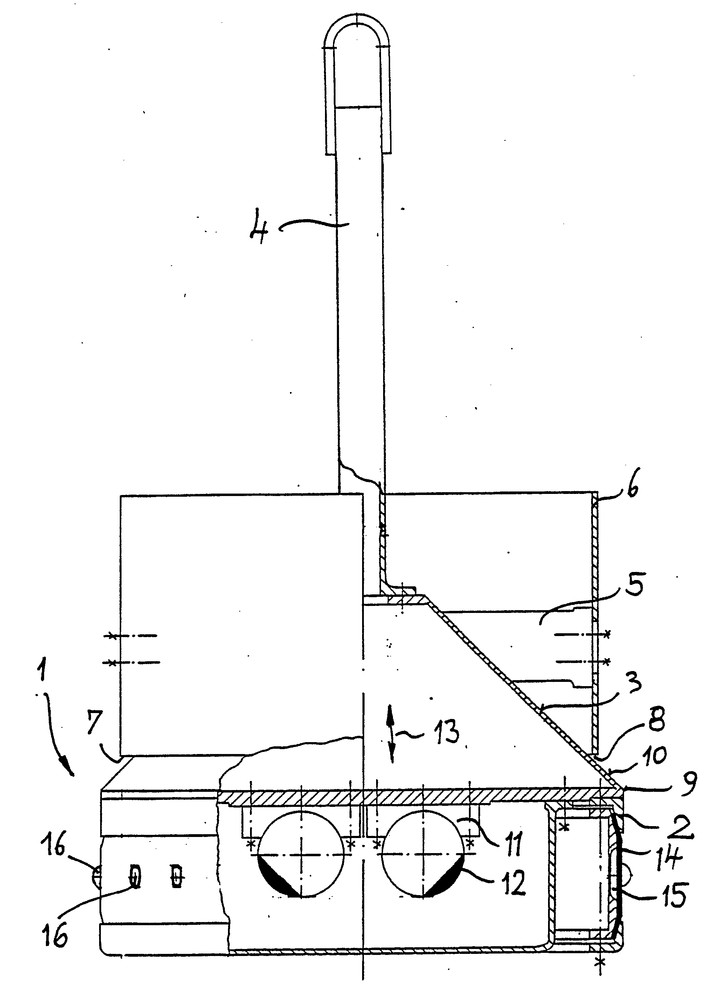

In Fig. 1 ist ein Spachtelkörper 1 dargestellt, der aus einem im wesentlichen zylindrischen Grundkörper 2 besteht, an den sich nach oben ein konischer Kopfteil 3 anschließt. An dem konisch zulaufenden Kopfteil 3 ist ein Tragrohr 4 befestigt, mit dem der Spachtelkörper über ein Hebezeug in vertikaler Richtung bewegt werden kann.

Auf dem konischen Kopfteil 3 ist über schmale Stege 5 ein Kragen 6 in der Weise befestigt, daß er mit seiner Unterkante 7 mit Abstand zum konischen Kopfteil 3 einstellbar ist. Der Kragen 6 mit dem in seinem Innenraum liegenden konischen Kopfteil 3 bildet einen Vorratsbehälter zur Aufnahme der Beschichtungsmasse.

Der Kragen 6 ist in seinem Durchmesser geringer als der zylindrische Basisteil, so daß zwischen der eine schlitzförmige Durchtrittsöffnung 8 definierenden Unterkante 7 des Kragens 6 und einer am Übergang zwischen dem zylindrischen Basisteil 2 und dem konischen Kopfteil 3 gebildeten Streichkante 9 eine freie Zulauffläche 10 vorhanden ist, auf der sich das aus dem Vorratsbehälter austretende verflüssigte Beschichtungsmaterial in einer Vorschichtung ausbreiten kann.

Im zylindrischen Grundkörper 2 des Spachtelkörpers 1 sind zwei gegenläufig rotierende, regelbare Elektromotore 11 angeordnet, die hier nur schematisch angedeutet sind, über die zwei Unwuchten 12 gegenläufig zueinander betrieben werden, so daß der Spachtelkörper 1 in Richtung des Pfeiles 13 in pulsierende Bewegungen versetzt werden kann.

Am zylindrischen Grundkörper 2 ist eine aus einem elastischen Material, vorzugsweise Gummi, hergestellte Glättmanschette 14 befestigt, die auf der Innenseite sich auf einem Blähkörper 15 in Form eines in Umfangsrichtung verlaufenden Schlauches abstützt. Über den Blähkörper kann mittels einer hier nicht näher dargestellten Schlauchleitung ein Druckmittel, vorzugsweise Preßluft, zugeführt werden, so daß die Glättmanschette um ein gewisses Maß aufgebläht, zumindest jedoch gegenüber dem zylindrischen Grundkörper 2 elastisch abgestützt ist.

Auf der Glättmanschette 14 sind über den Umfang gleichmäßig verteilt stegförmige Abstandhalter 16 lösbar befestigt, die im Betrieb an der Rohrinnenwandung zur Anlage kommen. Die Höhe der stegförmigen Abstandhalter 16 bestimmt die aufzutragende Schichtdicke.

Das Tragrohr 4 ist an seinem oberen Ende unter Zwischenschaltung eines mit einer Dämpfung versehenen Federungsgliedes an einem hier nicht näher dargestellten Hebezeug angehängt, so daß der in ein vertikal stehendes Rohr eingebrachte Spachtelkörper 1 langsam von unten nach oben bewegt werden kann und zugleich über die gegenläufig rotierenden Unwuchten dieser fortschreitenden Bewegung eine oszillierende Auf- und Abbewegung in gleicher Ausrichtung überlagert werden kann.

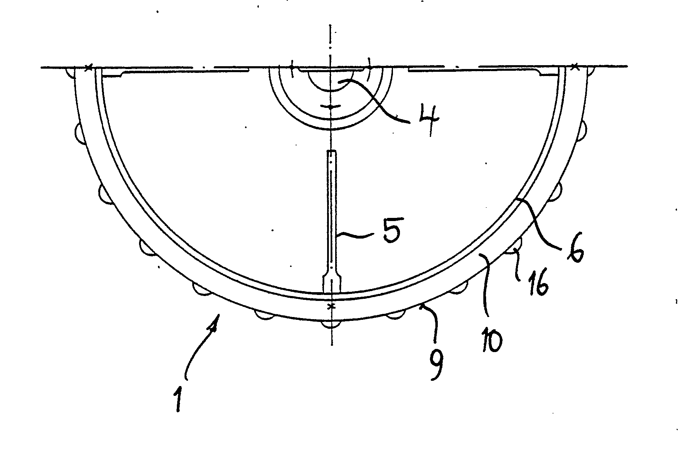

Fig. 2 zeigt die Aufsicht auf den Spachtelkörper in einem Halbschnitt.

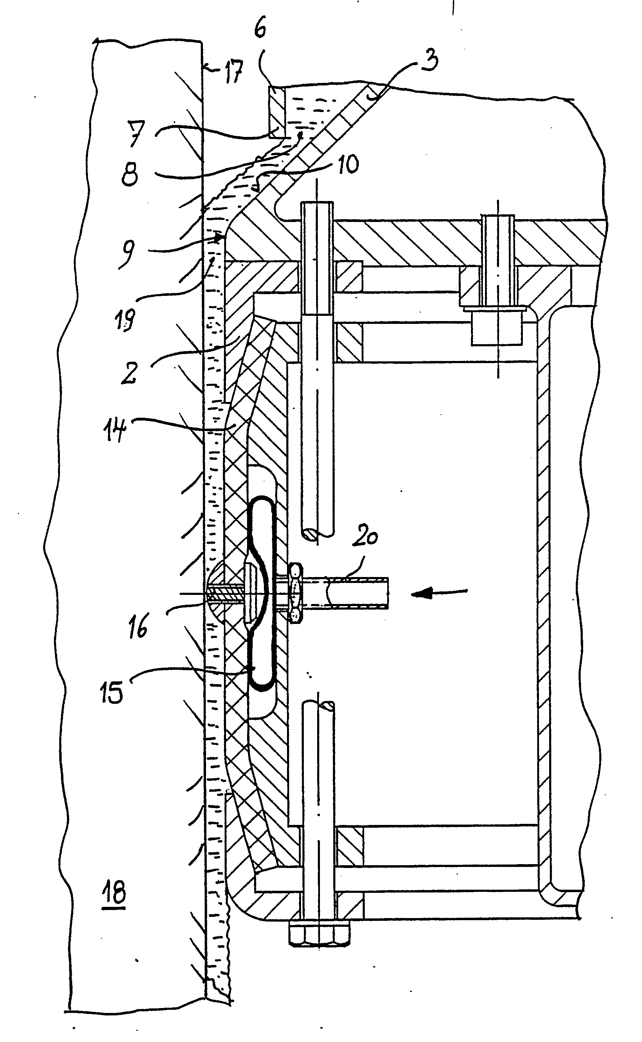

Die Arbeitsweise der Vorrichtung wird anhand der vergrößerten Darstellung in Fig. 3 näher erläutert. Nachdem in den durch den konischen Kopfteil 3 und den Kragen 6 definierten Vorratsbehälter eine abgemessene Vorratsmenge eines Beschichtungsmaterials mit thixotropen Eigenschaften, beispielsweise ein Kunstharzmörtel auf einer Zweikomponentenepoxydharzbasis mit Thixotropiermittel und feuergetrocknetem feinkörnigem Quarzsand als Füllstoff, eingebracht worden ist, wird der Spachtelkörper mittels des Hebezeuges in ein vertikal stehendes Betonrohr so weit abgelassen, daß die Streichkante 9 in Höhe der Endkante des auf dem Glockenende stehenden Rohres liegt.

Nunmehr werden die Schwingungserzeuger 11 in Betrieb gesetzt, so daß durch die pulsierenden Bewegungen der im Vorratsbehälter befindliche Kunststoffmörtel fließfähig wird und durch die durchgehend schlitzförmige Zulauföffnung 8 gegen die Innenwandung 17 des zu beschichtenden Betonrohres 18 läuft und sich hierbei in Form eines "Ringes" an der Innenwandung 17 anlegt. Nunmehr wird unter Aufrechterhaltung der vertikal pulsierenden Bewegung der Spachtelkörper über das Hebezeug langsam angehoben, so daß der "Ring" aus Beschichtungsmasse in den verbleibenden Zwischenraum 19 zwischen der Innenwan dung 17 und der zylindrischen Umfangsfläche des Spachtelkörpers 1 eingezogen und auf der Innenwandung 17 verstrichen wird. Da die pulsierende Bewegung während des ganzen Streichvorganges so lange auf die Beschichtungsmasse ausgeübt wird, wie der Oberflächenkontakt zwischen Spachtelkörper und Masse vorhanden ist, bleibt die Fließfähigkeit und damit auch die Formbarkeit der Masse erhalten, so daß über diesen, während einer verhältnismäßig langen Einwirkungszeit ausgeübten Streichvorgang, alle Poren in der Oberfläche der Innenwandung 17 mit Beschichtungsmasse ausgefüllt werden. Zugleich bildet sich an beiden Grenzflächen der Masseschicht ein dünner Kunstharzfilm aus.

Wird nun über einen Anschlußstutzen 20 in den schlauchförmigen Blähkörper 15 Preßluft aufgegeben, dann wird die Glättmanschette 14 gegen die Innenwandung 17 des Rohres bewegt, so daß die Abstandhalter 16 an der Oberfläche zur Anlage kommen. Da die Abstandhalter 16 gleichmäßig auf dem Umfang verteilt sind und in ihrem Abstand zueinander einerseits und die Dicke der Glättmanschette 14 andererseits so bemessen sind, daß die zylindrische Grundform der Glättmanschette erhalten bleibt, paßt sich die Glättmanschette der Querschnittskontur des zu beschichtenden Rohres jederzeit an, so daß alle Unrundheiten ausgeglichen werden und über den Umfang gesehen ein Spalt mit gleicher Dicke entsteht und damit die aufgebrachte Beschichtungsmasse in gleicher Dicke glattgestrichen wird.

Sobald der in Achsrichtung des Rohres vibrierende Spachtelkörper 1 sich von der aufgetragenen Schicht getrennt hat, verliert die Beschichtungsmasse aufgrund der thixotropen Eigenschaft ihre Fließfähigkeit, so daß trotz der vertikalen Ausrichtung des Rohres die aufgetragene Schicht an der Innenwand "steht" und nicht mehr nach unten ablaufen kann. Nachdem der Spachtelkörper vollständig aus dem Rohr herausgezogen worden ist, muß dieses in Ruhe bleiben, bis die Beschichtungsmasse vollständig ausgehärtet ist.

Der geringe Überschuß an Beschichtungsmasse wird auf der Stirnfläche des Spitzendes von Hand glattgestrichen, so daß auch dieser Bereich mit einer Korrosionsschutzschicht versehen ist.

Da durch die Abstandhalter 16 beim Auftragen der Schicht schmale, in Längsrichtung des Rohres verlaufende Rillen eingeformt worden sind, wird nunmehr der gleiche Spachtelkörper mit abgenommenen Abstandhaltern oder aber ein weiterer Spachtelkörper mit glatter Manschette wiederum in das Rohr eingeführt, wobei im Vorratsbehälter eine entsprechend geringe Menge an Beschichtungsmasse enthalten ist. Die Beschichtungsmasse wird wieder durch die pulsierenden Bewegungen verflüssigt und läuft über die Zulauffläche 10 zur Streichkante 9 und wird dann bei der Aufwärtsbewegung des Spachtelkörpers in den dann noch vorhandenen geringen Spalt zwischen Streichkante 9 und Oberfläche der ausgehärteten Beschichtung eingezogen. Im Bereich der vom ersten Arbeitsgang verbliebenen längslaufenden Rillen werden diese mit Beschichtungsmasse ausgefüllt und über die ggf. über den Blähkörper vorgespannte Glättmanschette vollständig ausgefüllt. Bei diesem zweiten Überlauf werden nicht nur die Rillen ausgefüllt sondern auch die Oberfläche noch einmal geglättet. Nach Abschluß der Beschichtungsarbeiten werden dann in einem zusätzlichen Arbeitsgang die außenliegende Fläche des Spitzendes und die an die Innenwandung des Rohres anschließende Innenfläche der Glocke bis zur Dichtung mit einer Korrosionsschutzschicht versehen. Diese kann durch einen Anstrich aufgebracht werden, da in diesem Bereich die Innenwandung nicht mehr dem Verschleiß des durchströmenden Mediums ausgesetzt ist.

Die Energieversorgung für den Schwingungserzeuger sowie die Zuführung des Druckmittels zum Blähkörper 15 erfolgt über entsprechende Zuleitungen, die durch das Tragrohr 4 in den Spachtelkörper in nicht näher dargestellter Weise eingeführt sind. Da das Tragrohr 4 um ein Mehrfaches länger ist als die Höhe des Spachtelkörpers, läßt sich der Spachtelkörper 1 auch mit einem einfachen Seilhebezeug, beispielsweise einem Kran mit Langsamhub kippfrei von unten nach oben durch ein Betonrohr hindurchziehen.

**Ansprüche**

1. Verfahren zum Beschichten der Innenwandung eines Betonrohres mit einer Beschichtungsmasse, vorzugsweise einer reaktiv aushärtenden und lösungsmittelfreien Beschichtungsmasse auf Kunstharzbasis, dadurch **gekennzeichnet,** daß eine Beschichtungsmasse mit thixotropen Eigenschaften als Vorratsmenge an einem Ende, vorzugsweise am unteren Rohrende in den Innenraum des vertikal ausgerichteten Rohres eingebracht, durch Einleitung pulsierender Kräfte in die Vorratsmenge verflüssigt und bei im wesentlichen konstantem Zufluß über einen Ringspalt an die Innenwandung als Schicht angelegt und in Achsrichtung fortschreitend in wenigstens einem Durchgang aufgestrichen wird.

2. Verfahren nach Anspruch 1, dadurch gekennzeichnet, daß beim Aufstreichen der Beschichtungsmasse der axial fortschreitenden Streichbewegung eine in Achsrichtung pulsierende Bewegung überlagert ist.

3. Verfahren nach Anspruch 1 oder 2, dadurch gekennzeichnet, daß für den Auftrag einer Dickschicht in einem ersten Arbeitsgang eine Grundschicht und nach dem Aushärten in einem zweiten Arbeitsgang eine Feinschicht aufgebracht wird.

4. Verfahren nach einem der Ansprüche 1 oder 2, dadurch gekennzeichnet, daß nach dem Aufbringen der Beschichtungsmasse die Schichtoberfläche ohne Massezufluß in einer durchgehenden Streichbewegung mit überlagerter pulsierender Bewegung glattgestrichen wird.

5. Vorrichtung zum Beschichten der Innenwandung eines Betonrohres mit einer Beschichtungsmasse, vorzugsweise einer reaktiv aushärtenden und lösungsmittelfreien Beschichtungsmasse auf Kunstharzbasis, insbesondere zur Durchführung des Verfahrens nach den Ansprüchen 1 bis 5, dadurch gekennzeich net, daß ein im wesentlichen zylindrischer Spachtelkörper (1) vorgesehen ist, der mit einem Antriebsmittel für den axialen Durchzug durch das zu beschichtend Rohr (18) in Verbindung steht und der eine entsprechend der vorgesehenen Schichtdicke mit Abstand zur Rohrinnenwandung (17) endende, in Umfangsrichtung verlaufende Streichkante (9) aufweist, die, in Durchzugsrichtung gesehen, in eine konische Zulauffläche (10) übergeht, daß auf die Zulauffläche (10) wenigstens eine Zulauföffnung (8) für die Beschichtungsmasse mündet, die mit einer Massezufuhreinrichtung in Verbindung steht, und daß ein Schwingungserzeuger zur Erzeugung einer in Durchzugsrichtung verlaufenden Schwingbewegung vorgesehen ist, der zumindest den Bereich der Zulauffläche (10) in Schwingungen versetzt.

6. Vorrichtung nach Anspruch 5, dadurch gekennzeichnet, daß am Spachtelkörper (1) in Durchzugsrichtung gesehen hinter der Streichkante (9) wenigstens eine in Umfangsrichung verlaufende Glättmanschette (14) aus einem elastisch verformbaren Werkstoff angeordnet ist.

7. Vorrichtung nach Anspruch 5 oder 6, dadurch gekennzeichnet, daß die Glättmanschette (14) auf ihrer Innenseite mit einem umlaufenden Blähkörper (15) versehen ist, der mit einem Druckmittel beaufschlagbar ist.

8. Vorrichtung nach einem der Ansprüche 5 bis 7, dadurch gekennzeichnet, daß der Spachtelkörper (1) mit mehreren, gleichmäßig auf den Umfang verteilten Abstandhaltern (16) versehen ist, die an der Rohrinnenwandung (17) anliegen.

9. Vorrichtung nach einem der Ansprüche 5 bis 8, dadurch gekennzeichnet, daß die Abstandhalter (16) an einer Glättmanschette (14) vorzugsweise im Bereich des Blähkörpers (15) befestigt sind.

10. Vorrichtung nach einem der Ansprüche 5 bis 9, dadurch gekennzeichnet, daß die Abstandhalter (16) lösbar befestigt sind.

11. Vorrichtung nach einem der Ansprüche 5 bis 10, dadurch gekennzeichnet, daß die Höhe der Abstandhalter (16) der aufzubringenden Schichtdikke entspricht.

12. Vorrichtung nach einem der Ansprüche 5 bis 11, dadurch gekennzeichnet, daß die Massezufuhreinrichtung durch einen auf dem Spachtelkörper (1) angeordneten Vorratsbehälter gebildet wird, der mit dem Schwingungserzeuger (11, 12) in Verbindung steht.

13. Vorrichtung nach einem der Ansprüche 5 bis 12, dadurch gekennzeichnet, daß die auf die Zulauffläche (10) mündende Zulauföffnung (8) durch einen umlaufenden Schlitz im Bodenbereich des Vorratsbehälters gebildet wird.

14. Vorrichtung nach einem der Ansprüche 5 bis 13, dadurch gekennzeichnet, daß der Boden des Vorratsbehälters im Bereich der Zulauföffnung (8) an die Zulauffläche (10) anschließend nach oben konisch zu laufend ausgebildet ist.

15. Vorrichtung nach einem der Ansprüche 5 bis 14, dadurch gekennzeichnet, daß der Vorratsbehälter durch einen Kragen (6) gebildet wird, der auf dem in Durchzugrichtung konisch zulaufenden Spachtelkörper (1) höheneinstellbar befestigt ist.

16. Vorrichtung nach einem der Ansprüche 5 bis 15, dadurch gekennzeichnet, daß der Schwingungserzeuger (11, 12) im Spachtelkörper (1) vorzugsweise unterhalb des Vorratsbehälters angeordnet ist.

17. Vorrichtung nach einem der Ansprüche 5 bis 16, dadurch gekennzeichnet, daß als Schwingungserzeuger (11, 12) zwei in der Drehzahl regelbare und gegenläufig angetriebene Unwuchten (12) vorgesehen sind.

18. Vorrichtung nach einem der Ansprüche 5 bis 17, dadurch gekennzeichnet, daß der Spachtelkörper (1) an seinem oberen Ende mit einem in Durchzugsrichung verlaufenden Tragrohr (4) verbunden ist, das um ein Mehrfaches länger ist als der Spachtelkörper (1) und das mit seinem freien Ende an einem Hebezeug als Antriebsmittel angehängt ist und durch das die Energieversorgungsleitungen für Schwingungserzeuger (11, 12) und Blähkörper (15) hindurchgeführt sind.